# EUROPEAN PATENT APPLICATION

(11) **EP 1 179 773 A1**
(43) Date of publication of application: **13.02.2002**
(21) Application number: 00117470.5
(22) Date of filing: 11.08.2000
(51) Int. Cl.: G06F 9/46

(54) **Method and apparatus of processing embedded objects**

(71) Applicant: SUN MICROSYSTEMS, INC., Palo Alto, California 94303 (US)
(72) Inventor: Tesch, Falko, 20253 Hamburg (DE); Breuer, Matthias, 21220 Seevetal (DE); Pingel, Jürgen, 21502 Geesthacht (DE)
(74) Representative: Betten & Resch

(57) **Abstract**

A method of processing a document containing an embedded object in a first format corresponding to a first application program, said method comprising converting said embedded object into a second format different from said first format and corresponding to a second application program to enable said embedded object to be displayed and/or edited when processing said document.

## Description

### FIELD OF THE INVENTION

The present invention relates to documents containing embedded objects, and in particular the invention relates to the processing of embedded objects.

### DESCRIPTION OF THE RELATED ART

One method to enable the data exchange between a source document and a target document is to copy a portion of a source document into a target document by means of so-called clipboard. Thereby a user can insert parts of the source document into the target document.

The data exchange through the clipboard has the disadvantage that if the source document and the target document require different application programs for editing, then it is not possible to edit the inserted part using the application program of the target document. To overcome this disadvantage, there have been developed several approaches, one being the so-called object linking and embedding (OLE) technology, another one being the so-called OpenDoc technology. Hereinbelow the OLE technology will be described in somewhat more detail.

Object linking and embedding (OLE) is a technology which is used to enable the exchange of data between application programs, or, to be more accurate, to enable the incorporation of a document generated using one application program into a document generated using another application program. An application program generates documents in accordance with a certain format and the formats of the documents generated by different application programs usually are different from each other. This is the main reason why documents require a certain application program in order to enable a user to display and edit their content.

However, by using OLE a document which has been generated using a certain application program may contain so-called embedded objects which have been generated using a different application program.

A document containing such an embedded object is called a compound document. The embedded object has been generated using a certain application program, the so-called OLE server. Using this application program (the OLE server) a source document has been generated which in part or as a whole can then be incorporated into a different document (the so-called target document) as an embedded object (OLE object). This can be done by either actually "embedding" the OLE object into the target document, which means that a copy of the source document or a portion of the source document is in full incorporated into the target document together with some information about the application program by which the source document has been generated. Another possibility of incorporating the embedded object into the embedding document consists in inserting a link to the source document into the target document, usually in form of a pointer. Such a link then only contains information about the location of the source document and about which fraction of the source document should appear in the target document.

Both ways, the actual "embedding" and the "linking" make it possible to incorporate a source document or a fraction of it into a target document. Moreover, both techniques facilitate the editing of the embedded object since in both cases the embedded object contains information about the application program which has been used for generating the embedded object.

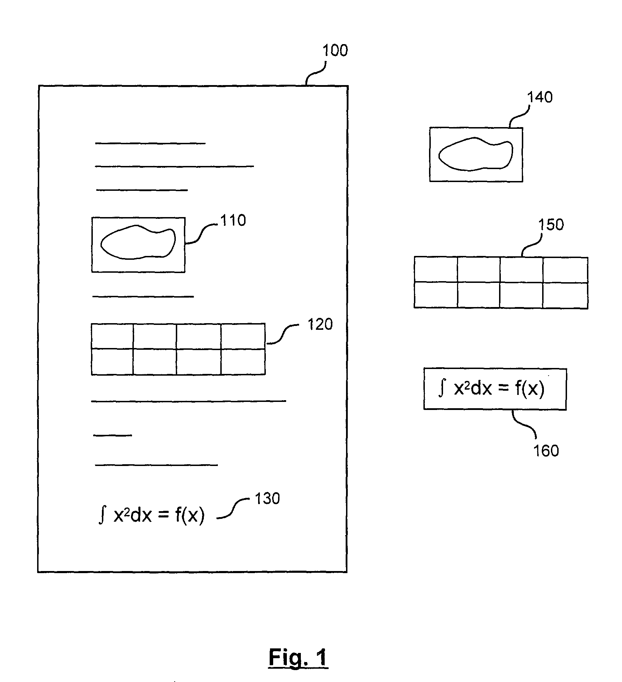

Fig. 1 schematically illustrates a compound document 100 which itself is a text document but contains as embedded objects a graphics object 110, a table 120 and a formula 130.

Those embedded objects may be actually "embedded" in the target document, or they may be stored in different files. In both cases they may have different formats and may require different application programs for processing. While the text document may be for example a MS Word document, the embedded object 1 may be a Corel Draw graphics, object 2 an MS Excel table and object 3 a MS Equation formula.

While on the display as schematically shown in Fig. 1 the embedded objects are displayed as if they were a part of the text document, they may actually be stored in different files linked to the text document. Rather than containing the embedded objects themselves the text document then contains pointers to the embedded objects, a first pointer pointing to object 1, a second pointer pointing to object 2 and a third pointer pointing to object 3, the three objects being stored in different files 140, 150, and 160 having different formats, respectively. The embedded objects thereby are "linked" to the embedding document.

If a user now processes the target document (e.g. for the purpose of editing), then he may wish to also edit the embedded objects. Assuming the application program used by the user for editing is capable of displaying the embedded objects (which is not necessarily the case), the user may now wish to edit object 1. On request by the user (for example by double-clicking on the object) the so-called server application is loaded, which means that the application program required for editing the embedded object is started thereby enabling the user to edit the object. Since the embedded objects, whether being actually "embedded" or whether they are just "linked", contain information about their corresponding application program (the server application) this server application can be loaded to facilitate editing of the embedded objects.

This can either be done by providing the user with a new window in which the server application is running (out-of-place editing), or the editing can be done in-place which means that in the application program used for editing the target document there shows up the taskbar and possibly the toolbox of the application program required for editing the embedded objects.

Embedded objects and the data exchange tools making them possible, such as OLE or OpenDoc are convenient for the user since they facilitate editing of objects contained in a certain document although the application program of this document in principle would not allow such an editing. If the embedded objects are truly "embedded" which means a copy of the source object is contained in the embedding document, then the source document is not affected through editing process. However, if the embedded objects are just "linked", then the editing of an embedded object directly affects the source document linked to the embedding object. This makes it possible to amend or update a lot of target documents simultaneously just by updating or amending the embedded objects contained therein.

However, editing the embedded object when processing a target document requires that the application program corresponding to the embedded object is installed on the system. This is not always the case, depending how a particular computer system is configured. E.g. some application programs or components of application programs are not available on certain operating systems. It may therefore happen that the attempt to edit an embedded object by a user will fail.

Sometimes a user trying to edit a target document containing embedded objects may even not be provided with a display of the objects contained in the target document. Embedded objects usually contain a Metafile with graphic information about their content, so that they can based on this Metafile be displayed to a user even if the application program (the server) for editing the object is not available on the system. However, sometimes the system or the application program even is not capable to display the embedded object based on its Metafile, and then a user just will see nothing of the embedded object.

### SUMMARY OF THE INVENTION

According to an embodiment of the present invention an embedded object is converted into a different format to facilitate the processing of the embedded object, in particular the displaying and/or editing of the object.

According to an embodiment the conversion takes place only if editing is to be performed. This avoids unnecessary information losses due to conversion for cases where the user actually does not want to edit the embedded object.

According to another embodiment the conversion takes place in cases where no application program is available which could operate as a server for editing the embedded object. This enables editing of such objects by the user in cases where the system configuration does not allow editing of the original embedded object.

According to another embodiment the user can be provided with several options, such as the selection of a target format for conversion of an unrecognized object, the selection of a target format for saving an object which has been edited, the selection of formats which should be automatically converted, possibly together with their target formats, the definition of formats for which no automatic conversion should take place, etcetera. One or more of those options may be set as default options.

According to another embodiment the conversion may involve one or more intermediate formats into which the embedded object is to be converted. Depending on the available filters this may increase the number of possible target formats which can be obtained through conversion, thereby also increasing the probability that a suitable server application will be available on the system.

Depending on user settings the conversion may be carried out automatically or based on an input by the user, possibly after having provided the user several options how to proceed further.

### BRIEF DESCRIPTION OF THE DRAWINGS

- Fig. 1: schematically illustrates a document containing embedded objects.
- Fig. 2: schematically illustrates a computer system which can be used in connection with an embodiment of the present invention.
- Fig. 3: schematically illustrates a document containing an embedded object.
- Fig. 4: schematically illustrates a mask offering the user several conversion options.
- Fig. 5A: shows a flowchart schematically illustrating an embodiment of the present invention.
- Fig. 5B: shows a flowchart which illustrates in more detail a part of the flowchart shown in Figure 5A.
- Fig. 6: shows a client-server architecture applicable to an embodiment of the present invention

### DETAILED DESCRIPTION

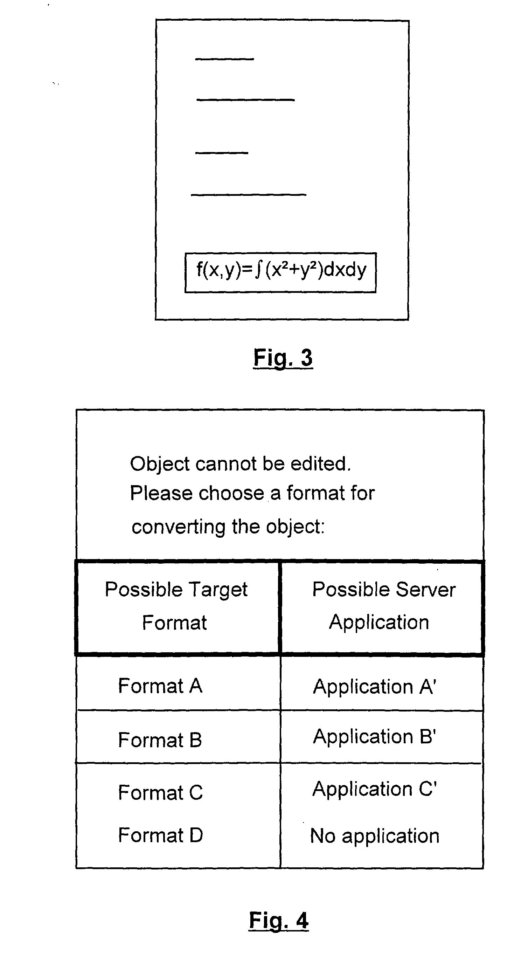

Assuming now that a text document contains as an embedded object a formula, such as shown schematically in Fig. 3, the formula may require an application program for editing which is not installed on the system. The text document may be e.g. a MS Word file, and the MS Equation editor may not be installed on the system in this example.

When the user tries to edit the formula which has been displayed based on its metafile, the user would in a conventional system be unable to edit the formula.
According to an embodiment of the present invention, however, it is then checked whether any other application program is installed on the system which is suitable for editing the embedded object. Based on the type of an embedded object its data format can be determined and based on the filters available for this format a suitable target format for format conversion can be chosen.

Assuming that in case of the present embodiment the system has installed thereon StarOffice produced by Sun Microsystems, Palo Alto, USA, together with its module StarOffice Math and a filter for converting MS Equation formulas into the StarOffice Math format. The application program StarOffice Writer then is loaded to open the document shown in Figure 3. If the user now double-clicks on the formula in Fig. 3, then the corresponding embedded object will be converted into the StarOffice Math format, thereby enabling the formula to be edited using StarOffice Math as a server. The toolbox of StarOffice Math will pop up and the user will be able to edit the formula. When saving it again, it will be reconverted into the MS Equation format, to the extent that the available filter is capable of doing so, unless another format has been selected by the user.

In this embodiment the conversion only takes place when a user requests editing, before such a request is made the embedded object is displayed based on its metafile which means based on its original content. This avoids introducing the possibility of any information losses which may occur as a result of the conversion at an unnecessary early stage, where the user may only be interested in a display of the embedded object but does not wish to edit it. Only when actually editing is requested the conversion takes place.

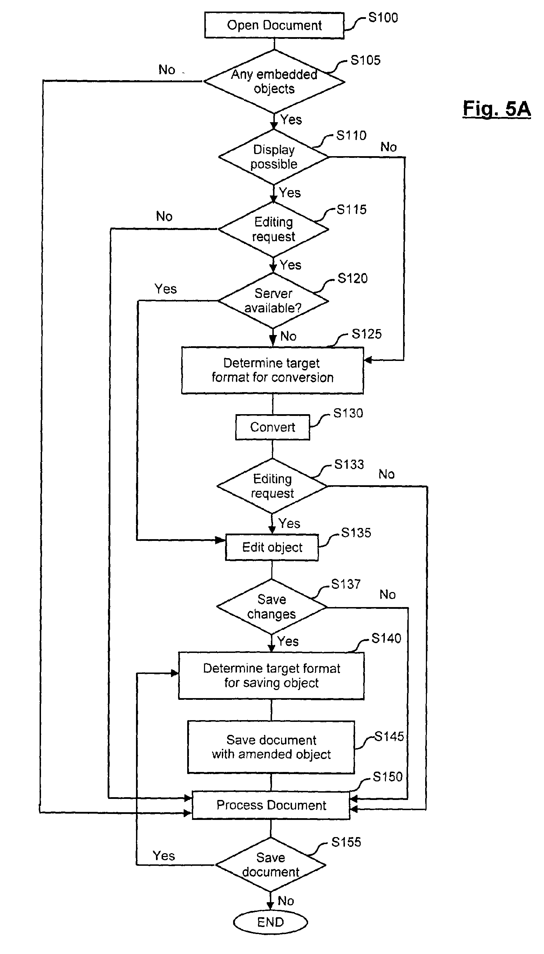

In a further embodiment of the present invention a user may be provided with one or more options for converting an embedded object. Fig. 4 schematically illustrates a pop-up window which is displayed when editing of an embedded object is requested for which no server is available on the system. The user may then select among one or more possible target formats which allow editing of the embedded object after conversion since corresponding servers are available on the system. On the left-hand side possible conversion formats are displayed based on the available filters, on the right-hand side corresponding server applications (if available) are listed.

A similar mask will be displayed to the user when saving the embedded object again. The user may then choose among several target formats into which the edited embedded is to be saved.

Fig. 5A shows a flowchart schematically illustrating the above embodiment. In step S100 a document is opened. It is then checked in step S105 whether the document contains embedded objects. If no such objects are contained in the document, then the normal processing of the document proceeds with step S150.

If embedded objects are contained in the document, then in step S110 it is checked whether a display of those embedded objects is possible. If yes, and if no editing request is issued by the user, then the normal processing of the document can proceed with step S150. If no, then in step S125 a target format for converting the object is determined in a manner which will be described in more detail below. After conversion (step S130) the object then has a format which can be displayed. If editing is requested in step S133, then the editing of the embedded object is carried out in step S135. Otherwise the flow continues with the normal processing of the document.

However, if in step S115 a user requests to edit the embedded object, then it is checked whether a server corresponding to this object type is available. If no, then in step S125 a target format for conversion of the embedded object has to be determined. In step S130 the conversion is performed, and then the editing of the embedded object in step S135 is facilitated.

In step S137 a user may then request to save the changes which have been made during editing the embedded object. If a request for saving the changes is made, then in step S140 a target format for saving the object is determined. The manner in which this is determined will be discussed below in more detail. After conversion (step S143) and after in step S145 the document together with the amended embedded object has been saved, then the normal processing of the document may continue in step S150. However, if in step S137 user does not request to save the changes, then the flow may directly continue with the normal processing of the document (step S150).

After having made further changes in the document (or in other embedded objects) in step S150, the user may request to save the document in step S155. In response to such a request the procedure returns to step S140 in order to determine a target format for saving the embedded object. After the saving has been made in step S155 the user may further edit the document or the procedure may end.

It should be noted, that if in step S110 it is determined that no display of the embedded object is possible, then the procedure may proceed with the determination of a target format for the conversion in step S125. This means that conversion is performed as late as possible if the object can be displayed. Only if no display of the object is possible, it is converted readily upon its detection.

There are many possible ways which can be imagined how it is determined whether an embedded object is to be converted at all, and how the target format for conversion is to be determined (step S125 in Fig. 5A). A user may be provided with a set of options to configure the manner in which embedded objects are dealt with. Some of those options are described in more detail hereinbelow.

It may for example be desirable to convert embedded objects even if the original server application is available on the system. For that purpose there could be provided an option for changing the default setting that an embedded object the server application of which is available is always automatically edited using its original server application. By changing this setting a user would then for any application, whether the original server application is available or not, be provided with one or more conversion options as shown in Fig. 4.

A more typical setting, however, would probably be that conversion only takes place if a server application for an embedded object is not available. According to one embodiment the conversion can take place automatically. Such an automatic conversion can either be carried out based on user settings, e.g. a setting defining "convert automatically all MS Equation objects into StarOffice Math objects", or the automatic conversion could be carried out based on a check of the system configuration. Based on the format of the embedded object, the filters and application programs available and the user settings, the system may then choose a suitable format into which the embedded object is converted.

According to a further embodiment, rather than carrying out an automatic conversion when an object is detected which needs conversion the user is prompted for interactively deciding whether to perform a conversion and for selecting a target format before a conversion is carried out. The user may be prompted for each embedded object or may carry out his selection once for the whole embedding document. The first alternative has the advantage that the user completely controls the format of each embedded object. The user can be offered a list with possible target formats based on the filters available similar to the one shown in Fig. 4. The same may take place when the user wishes to save the embedded object after editing, then again a list of possible target formats may be offered to the user. Thereby the user may save the embedded object into a different format, possibly even different from both the original format and the format used for editing. This interactive conversion procedure is also advantageous if no suitable target format could be detected automatically. This may e.g. be the case if due to the corruption of some files on the system the type of the embedded object cannot be correctly determined, but if nevertheless the object can be converted and then edited based on the knowledge and/or the selection of the user.

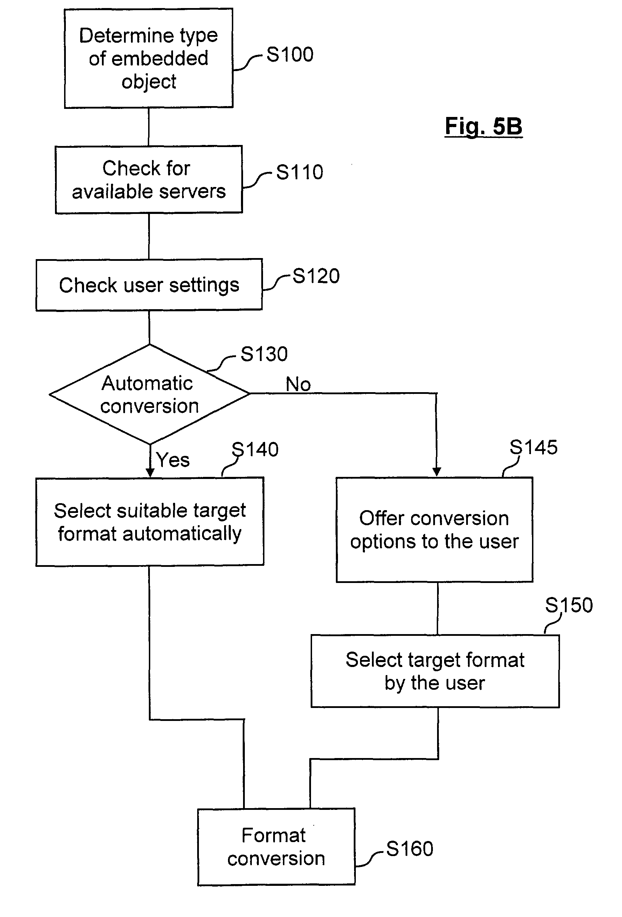

In the following the determination of the target format for conversion is schematically illustrated in connection with Figure 5B. Figure 5B shows a flowchart in which the determination of the target format (step S125 of the flowchart in Figure 5A) together with the conversion step (step S130 of Figure 5A) are illustrated in an exploded manner. However, Figure 5B may also similarly reflect an exploded illustration of steps S140 and S143 of Figure 5A which relate to the format conversion before saving.

If one or more suitable servers are available (step S110) and if the automatic conversion option is set to "yes" (step S130) then in step S140 a suitable target format is automatically selected and in step S160 the format conversion is carried out. If based on the user settings (step S120) it is determined in step S130 that no automatic conversion is desired, then in step S145 the user is offered a list of conversion options, e.g. in the form of a mask as shown in Figure 4. In step S150 the user may then select a target format for the conversion to be performed in step S160.

The procedure shown in Figure 5B may reflect the determination of the target format before editing (step S125 of Figure 5A) and/or it may reflect the determination of the target format before saving (step S140 in Figure 5A).

According to a further embodiment the user may decide already when opening an embedding document which format (and which application) are to be used for displaying and/or editing the embedded objects. This may also be offered as a configurable setting which enables the user to define the possibly necessary format conversions already when opening the embedding document.

According to a further embodiment more than one conversion steps are performed to facilitate editing of the embedded object. Assume that the embedded object has format A, that no corresponding server is available on the system and that a server would be available for an embedded object having format C. However, assume further that no filter for direct conversion from A to C is available but only filters for conversion from A to B and for conversion from B to C. Nevertheless, by converting the embedded object from A to B at first, and then from B to C the object can be edited on the system using the server application available for embedded objects having format C.

According to a further embodiment the system checks which filters are available, then determines all possible filter paths, and finally checks whether for a possible filter path there would be a corresponding server application available to edit the target object. If more than one conversion paths are available, then the user gets them offered as possibilities to select one of them. The possibilities offered to the user may be ordered according to certain criteria, such as the number of intermediate steps, e.g. the shortest conversion path having the least intermediate steps could be ranked first. If several paths have the same number of intermediate steps then the one having target format which has been defined as preferred by the user could be ranked first

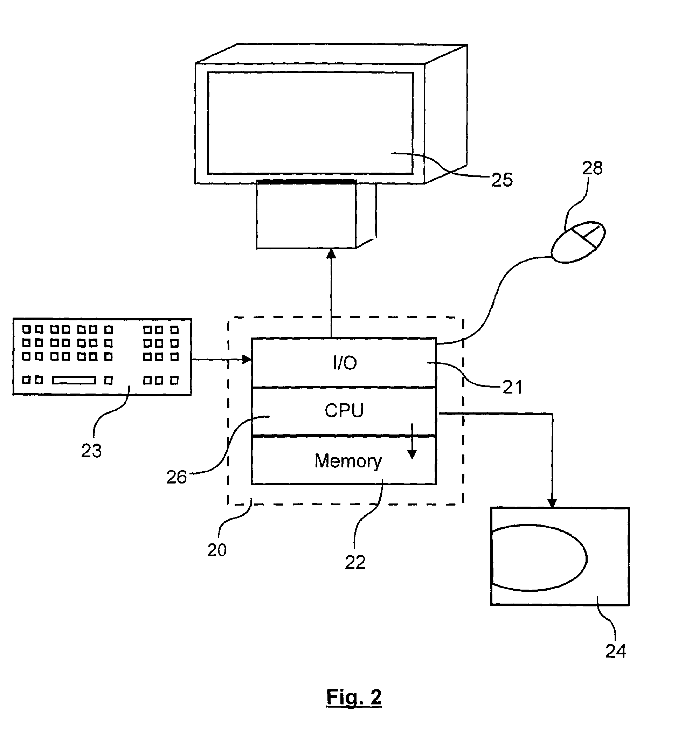

The present invention is applicable to a hardware configuration like a personal computer or a work station as illustrated schematically in Fig. 2. The computer may comprise a central processing unit CPU 26, an input output I/O unit 21, an internal memory 22 and an external memory 24. The computer may further comprise standard input devices like a keyboard 23, a mouse 28 or a speech processing means (not illustrated).

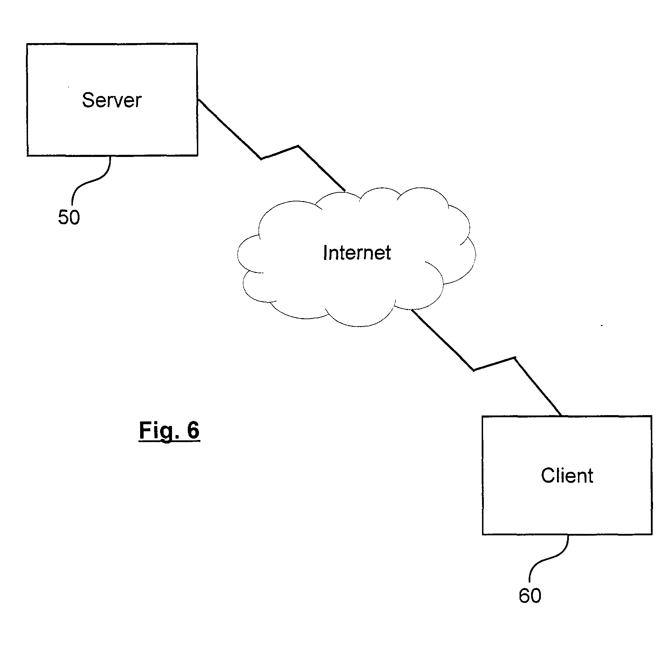

The invention, however, may also be applied to a client-server configuration as illustrated in Fig. 6. The document may be displayed on a display screen of a client device 60 while some or all steps of the method as illustrated before in connection with Figs. 1 to 5B are carried out on one or more server computer accessible by a client device over a data network such as the internet using a browser application or the like.

While the invention has been particularly shown with the reference to embodiments thereof, it will be understood by those skilled in the art that various other changes in the form and details may be made therein without departing from the spirit and scope of the invention.

## Claims

1. A method of processing a document containing an embedded object in a first format corresponding to a first application program, said method comprising:
converting said embedded object into a second format different from said first format and corresponding to a second application program to enable said embedded object to be displayed and/or edited when processing said document.

2. The method of claim 1, further providing the user with one or more of the following options:
enabling the user to select the target format for conversion of the embedded object;
enabling the user to select an application program for opening the embedded object;
enabling the user to select the format for saving the embedded object after processing;
automatically converting an embedded objects into a different format if no application for editing the unconverted object is available;
enabling the user to define one or more object formats for which no automatic conversion takes place despite no application for editing the unconverted object being available;
enabling the user to set one or more of the foregoing options as default options.

3. The method of claim 1 or 2, further comprising:
requesting the user to select a format into which an embedded object is to be converted when no corresponding application program is available; and or
requesting the user to select a target format for saving the embedded object.

4. The method of claim 1, 2 or 3, further comprising:
checking the system configuration in order to detect one or more application program formats into which the embedded object may be converted in order to enable processing of said embedded object;
offering the user one or more target formats for conversion based on said check of said system configuration.

5. The method of one of the preceding claims, wherein
if display on original content is possible the embedded object is displayed based on its original content as long as no request for editing said embedded object has been made by the user.

6. The method of one of the preceding claims, further comprising:
converting said embedded object into one or more intermediate formats in one or more intermediate conversion steps before converting said embedded object into the target format for editing and/or saving in a final conversion step.

7. The method of claim 6, further comprising:
offering to the user one or more conversion paths based on the filters and application programs available on the system.

8. A computer system for processing a document containing an embedded object in a first format corresponding to a first application program, said system comprising:
a memory (22) for storing the document and a processing unit (26) for carrying out the steps of:
converting said embedded object into a second format different from said first format and corresponding to a second application program to enable said embedded object to be displayed and/or edited when processing said document.

9. The computer system of claim 8, wherein said steps further comprise a tool for providing one or more of the following:
enabling the user to select the target format for conversion of the embedded object;
enabling the user to select an application program for opening the embedded object;
enabling the user to select the format for saving the embedded object after processing;
automatically converting an embedded objects into a different format if no application for editing the unconverted object is available;
enabling the user to define one or more object formats for which no automatic conversion takes place despite no application for editing the unconverted object being available;
enabling the user to set one or more of the foregoing options as default options.

10. The computer system of claim 8 or 9, further comprising:
a user interface requesting the user to select a format into which an embedded object is to be converted when no corresponding application program is available; and or
requesting the user to select a target format for saving the embedded object.

11. The computer system of claim 8, 9 or 10, further comprising:
a detection tool for checking the system configuration in order to detect one or more application program formats into which the embedded object may be converted in order to enable processing of said embedded object; and for
offering the user one or more target formats for conversion based on said check of said system configuration.

12. The computer system of one of claims 8 to 11, wherein
if display on its original content is possible the embedded object is displayed based on its original content as long as no request for editing said embedded object has been made by the user.

13. The computer system of one of claims 8 to 12, wherein said steps further comprise:
a tool for converting said embedded object into one or more intermediate formats in one or more intermediate conversion steps before converting said embedded object into the target format for editing and/or saving in a final conversion step.

14. The computer system of claim 13, wherein said steps further comprise:
a tool for offering to the user one or more conversion paths based on the filters and application programs available on the system.

15. A computer program product comprising computer program code enabling a computer to process a document containing an embedded object in a first format corresponding to a first application program, said computer program code comprising:
computer program code for converting said embedded object into a second format different from said first format and to a second application program to enable said embedded object to be displayed and/or edited when processing said document.

16. A computer program comprising computer program code enabling a computer to process a document containing an embedded object in a first format corresponding to a first application program, said computer program code comprising:
computer program code for converting said embedded object into a second format different from said first format and to a second application program to enable said embedded object to be displayed and/or edited when processing said document.
